(19) Europäisches Patentamt
European Patent Office
Office européen des brevets

(11) **EP 4 123 591 A2**

(12) **EUROPEAN PATENT APPLICATION**

(43) Date of publication:
**25.01.2023 Bulletin 2023/04**

(21) Application number: **22204584.1**

(22) Date of filing: **28.10.2022**

(51) International Patent Classification (IPC):
**G06V 10/62** (2022.01)    **G06V 10/80** (2022.01)
**G06V 10/82** (2022.01)    **G06V 20/52** (2022.01)
**G06V 40/20** (2022.01)

(52) Cooperative Patent Classification (CPC):
**G06V 20/52; G06V 10/62; G06V 10/806;
G06V 10/82; G06V 40/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021 CN 202111272717**

(71) Applicant: **Beijing Baidu Netcom
Science Technology Co., Ltd.
Beijing 100085 (CN)**

(72) Inventors:
• ZHOU, Desen
 **Beijing 100085 (CN)**
• WANG, Jian
 **Beijing 100085 (CN)**
• SUN, Hao
 **Beijing 100085 (CN)**

(74) Representative: **Laqua, Bernd Christian Kurt
Wuesthoff & Wuesthoff
Patentanwälte PartG mbB
Schweigerstraße 2
81541 München (DE)**

(54) **HUMAN-OBJECT INTERACTION DETECTION METHOD, NEURAL NETWORK AND TRAINING METHOD THEREFOR, DEVICE, AND MEDIUM**

(57)    The present disclosure provides a human-object interaction detection method, a neural network and a training method therefor, a device, and a medium, and relates to the field of artificial intelligence, and specifically to computer vision technologies and deep learning technologies. The method includes: performing first target feature extraction on a plurality of image features of an image to be detected to obtain a plurality of first target features; performing first interaction feature extraction on a plurality of image features to obtain a plurality of first interaction features and scores thereof; determining at least some first interaction features in the plurality of first interaction features based on the score of each of the plurality of first interaction features; determining a plurality of first motion features based on the at least some first interaction features and the plurality of image features; processing the plurality of first target features to obtain target information of a plurality of targets in the image to be detected; processing the plurality of first motion features to obtain motion information of one or more motions in the image to be detected; and matching the targets with the motions to obtain a human-object interaction detection result.

Fig. 2

## Description

## TECHNICAL FIELD

The present disclosure relates to the field of artificial intelligence, specifically to computer vision technologies and deep learning technologies, and in particular to a human-object interaction detection method, a training method for a neural network for human-object interaction detection, a neural network for human-object interaction detection, an electronic device, a computer-readable storage medium, and a computer program product.

## BACKGROUND

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

In an image human-object interaction detection task, it is required to simultaneously detect a human, an object, and an interaction between the two, pair a human and an object that have an interaction in an image, and output a triplet <human, object, motion>. In the task, it is required to perform target detection and simultaneously classify human motions, which is very challenging when objects and humans in the image crowd. Human-object interaction detection can be applied to the fields of video monitoring and the like to monitor human behaviors.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

## SUMMARY

The present disclosure provides a human-object interaction detection method, a training method for a neural network for human-object interaction detection, a neural network for human-object interaction detection, an electronic device, a computer-readable storage medium, and a computer program product.

According to an aspect of the present disclosure, there is provided a computer-implemented human-object interaction detection method, including: obtaining a plurality of image features of an image to be detected; performing first target feature extraction on the plurality of image features to obtain a plurality of first target features; performing first interaction feature extraction on the plurality of image features to obtain a plurality of first interaction features and a score of each first interaction feature of the plurality of first interaction features; determining at least some first interaction features in the plurality of first interaction features based on the score of each first interaction feature of the plurality of first interaction features; determining a plurality of first motion features based on the at least some first interaction features and the plurality of image features; processing the plurality of first target features to obtain target information of a plurality of targets in the image to be detected, where the plurality of targets include one or more human targets and one or more object targets; processing the plurality of first motion features to obtain motion information of one or more motions in the image to be detected, where each motion of the one or more motions is associated with one of the one or more human targets, and one of the one or more object targets; and matching the plurality of targets with the one or more motions to obtain a human-object interaction detection result.

According to another aspect of the present disclosure, there is provided a computer-implemented training method for a neural network for human-object interaction detection. The neural network includes an image feature extraction sub-network, a first target feature extraction sub-network, a first interaction feature extraction sub-network, a first motion feature extraction sub-network, a target detection sub-network, a motion recognition sub-network, and a human-object interaction detection sub-network. The training method includes: obtaining a sample image and a ground truth human-object interaction label of the sample image; inputting the sample image to the image feature extraction sub-network to obtain a plurality of sample image features; inputting the plurality of sample image features to the first target feature extraction sub-network to obtain a plurality of first target features; inputting the plurality of sample image features to the first interaction feature extraction sub-network, where the first interaction feature extraction sub-network is configured to receive the plurality of sample image features to output a plurality of first interaction features and a score of each first interaction feature of the plurality of first interaction features; determining at least some first interaction features in the plurality of first interaction features based on the score of each first interaction feature of the plurality of first interaction features; inputting the at least some first interaction features and the plurality of sample image features to the first motion feature extraction sub-network, where the first motion feature extraction sub-network is configured to receive the at least some first interaction features and the plurality of sample image features to output a plurality of first motion features; inputting the plurality of first target features to the target detection sub-network, where the target detection sub-network is configured to receive the plurality of first target features to output target information of a plurality of targets in the sample image, where the plurality of targets include one or more human targets and one or more object targets; inputting the plurality of first motion features to the motion recognition sub-network, where the motion recognition sub-network is configured to receive the plurality of first motion features to output motion information of one or more motions in the sample image, where each motion of the one or more motions is associated with one of the one or more human targets, and one of the one or more object targets; inputting the plurality of targets and the one or more motions to the human-object interaction detection sub-network to obtain a predicted human-object interaction label; calculating a loss value based on the predicted human-object interaction label and the ground truth human-object interaction label; and adjusting a parameter of the neural network based on the loss value.

According to another aspect of the present disclosure, there is provided a neural network for human-object interaction detection, the neural network including: an image feature extraction sub-network configured to receive an image to be detected to output a plurality of image features of the image to be detected; a first target feature extraction sub-network configured to receive the plurality of image features to output a plurality of first target features; a first interaction feature extraction sub-network configured to receive the plurality of image features to output a plurality of first interaction features and a score of each first interaction feature of the plurality of first interaction features; a first screening sub-network configured to determine at least some first interaction features in the plurality of first interaction features based on the score of each first interaction feature of the plurality of first interaction features; a first motion feature extraction sub-network configured to receive the at least some first interaction features and the plurality of image features to output a plurality of first motion features; a target detection sub-network configured to receive the plurality of first target features to output target information of a plurality of targets in the image to be detected, where the plurality of targets include one or more human targets and one or more object targets; a motion recognition sub-network configured to receive the plurality of first motion features to output motion information of one or more motions in the image to be detected, where each motion of the one or more motions is associated with one of the one or more human targets, and one of the one or more object targets; and a human-object interaction detection sub-network configured to receive the plurality of targets and the one or more motions to output a human-object interaction detection result.

According to another aspect of the present disclosure, there is provided a non-transitory computer-readable storage medium storing computer instructions, where the computer instructions are used to cause a computer to perform the method described above.

According to another aspect of the present disclosure, there is provided a computer program product, including a computer program, where when the computer program is executed by a processor, the method described above is implemented.

According to one or more embodiments of the present disclosure, two tasks of human-object interaction detection and motion recognition are decoupled, a feature with the highest score and most likely to include human-object interaction motion information is first screened from a plurality of image features, and a human-object interaction motion in the image to be detected is determined based on the feature, so that a recall rate of the motion recognition task can be improved, and a generalization capability of the human-object interaction detection method can be improved.

It should be understood that the content described in this section is not intended to identify critical or important features of the embodiments of the present disclosure, and is not used to limit the scope of the present disclosure. Other features of the present disclosure will be easily understood through the following description.

**BRIEF DESCRIPTION OF THE DRAWINGS**

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.

FIG. 1 is a schematic diagram of an exemplary system in which various methods described herein can be implemented according to an embodiment of the present disclosure;
FIG. 2 is a flowchart of a human-object interaction detection method according to an exemplary embodiment of the present disclosure;
FIG. 3 is a flowchart of a human-object interaction detection method according to an exemplary embodiment of the present disclosure;
FIG. 4 is a flowchart of matching a target with a motion according to an exemplary embodiment of the present disclosure;
FIG. 5 is a flowchart of a human-object interaction detection method according to an exemplary embodiment of the present disclosure;
FIG. 6 is a flowchart of a training method for a neural network for human-object interaction detection according to an exemplary embodiment of the present disclosure;

FIG. 7 is a flowchart of a training method for a neural network for human-object interaction detection according to an exemplary embodiment of the present disclosure;

FIG. 8 is a flowchart of a training method for a neural network for human-object interaction detection according to an exemplary embodiment of the present disclosure;

FIG. 9 is a structural block diagram of a neural network for human-object interaction detection according to an exemplary embodiment of the present disclosure;

FIG. 10 is a structural block diagram of a neural network for human-object interaction detection according to an exemplary embodiment of the present disclosure;

FIG. 11 is a structural block diagram of a neural network for human-object interaction detection according to an exemplary embodiment of the present disclosure; and

FIG. 12 is a structural block diagram of an exemplary electronic device that can be used to implement an embodiment of the present disclosure.

## DETAILED DESCRIPTION

Exemplary embodiments of the present disclosure are described below with reference to the accompanying drawings, where various details of the embodiments of the present disclosure are included for a better understanding, and should be considered as merely exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the related art, according to a human-object interaction detection method, a triplet is directly output using a one-stage method, according to another human-object interaction detection method, target detection and motion recognition are separately performed, and an obtained target is matched with an obtained motion. However, the former method has a poor interpretability, and it is difficult to obtain an accurate result, and the latter method lacks interaction between two subtasks of the target detection and the motion recognition, and it is easy to fall into a local optimal solution.

In order to solve the above problems, in the present disclosure, two tasks of human-object interaction detection and motion recognition are decoupled, a feature with the highest score and most likely to include human-object interaction motion information is first screened from a plurality of image features, and a human-object interaction motion in the image to be detected is recognized based on the feature, so that a recall rate of the motion recognition task can be improved, and a generalization capability of the human-object interaction detection method can be improved.

In the present disclosure, a "sub-network" of a neural network does not necessarily have a neural network structure based on a layer composed of neurons. A "sub-network" may have another type of network structure, or may process data, features, and the like that are input to the sub-network using another processing method, which is not limited herein.

The embodiments of the present disclosure will be described below in detail with reference to the accompanying drawings.

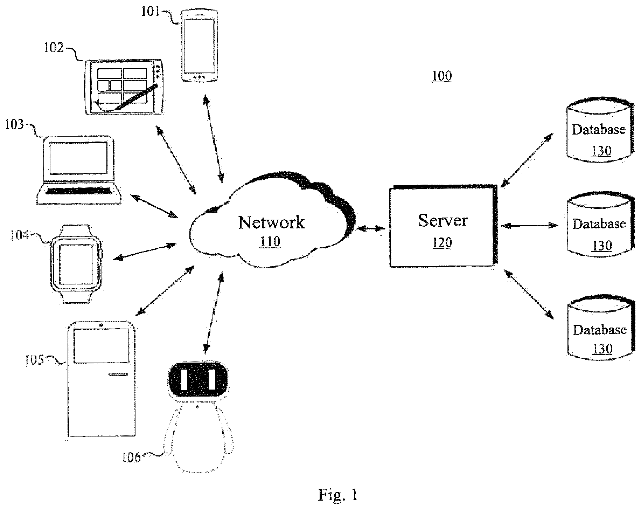

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more application programs.

In an embodiment of the present disclosure, the server 120 can run one or more services or software applications that enable a human-object interaction detection method to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, FIG. 1 is an example of the system for implementing various methods described herein, and is not intended to be limiting.

The user may input an image or a video for performing human-object interaction detection by using the client device 101, 102, 103, 104, 105, and/or 106. The client device may provide an interface that enables the user of the client device to interact with the client device. The client device may also output information to the user via the interface. Although FIG. 1 depicts only six types of client devices, those skilled in the art will understand that any number of client devices are possible in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client device 101, 102, 103, 104, 105, and/or 106. The server 120 may further include one or more application programs to display the data feeds and/or real-time events via one or more display devices of the client device 101, 102, 103, 104, 105, and/or 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The databases 130 may reside in various locations. For example, a database used by the server 120 may be locally in the server 120, or may be remote from the server 120 and may communicate with the server 120 via a network-based or dedicated connection. The databases 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of FIG. 1 may be configured and operated in various manners, such that the various methods and apparatuses described according to the present disclosure can be applied.

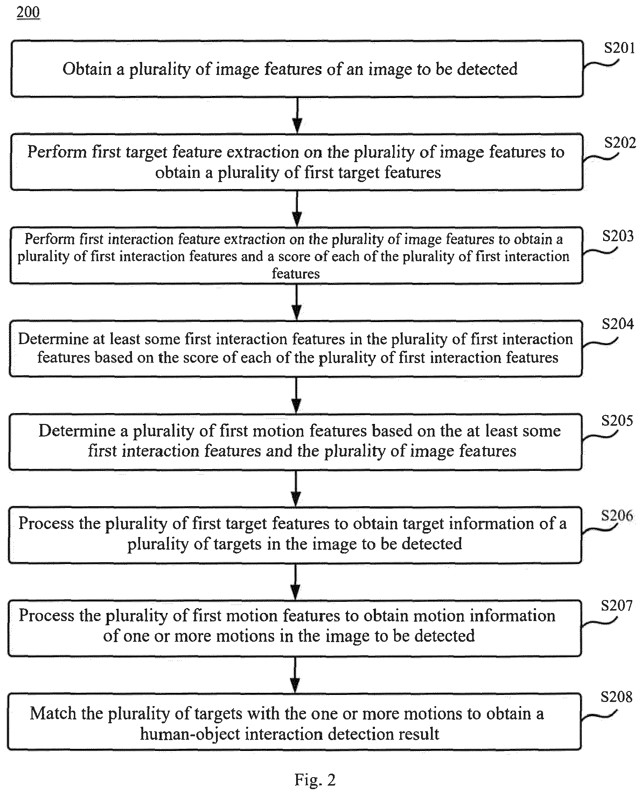

According to an aspect of the present disclosure, there is provided a human-object interaction detection method. As shown in FIG. 2, the method includes: step S201: obtaining a plurality of image features of an image to be detected; step S202: performing first target feature extraction on the plurality of image features to obtain a plurality of first target features; step S203: performing first interaction feature extraction on the plurality of image features to obtain a plurality of first interaction features and a score of each of the plurality of first interaction features; step S204: determining at least some first interaction features in the plurality of first interaction features based on the score of each of the plurality of first interaction features; step S205: determining a plurality of first motion features based on the at least some first interaction features and the plurality of image features; step S206: processing the plurality of first target features to obtain target information of a plurality of targets in the image to be detected, where the plurality of targets include one or more human targets and one or more object targets; step S207: processing the plurality of first motion features to obtain motion information of one or more motions in the image to be detected, where each of the one or more motions is associated with one of the one or more human targets, and one of the one or more object targets; and step S208: matching the plurality of targets with the one or more motions to obtain a human-object interaction detection result.

Thus, two tasks of human-object interaction detection and motion recognition are decoupled, a feature with the highest score and most likely to include human-object interaction motion information is first screened from the plurality of image features, and a human-object interaction motion in the image to be detected is determined based on the feature, so that a recall rate of the motion recognition task can be improved, and a generalization capability of the human-object interaction detection method can be improved.

According to some embodiments, the image to be detected may be, for example, any image that involves a human-object interaction. In some embodiments, the image to be detected may include a plurality of targets that include one or more human targets and one or more object targets. In addition, the image to be detected may further include one or more motions, and each motion is associated with one of the one or more human targets, and one of the one or more object targets.

In the present disclosure, the "motion" may be used to indicate an interaction between a human and an object, rather than a specific motion. The "motion" may further include a plurality of specific sub-motions. In an exemplary embodiment, the image to be detected includes a person holding a cup and drinking water, then there is a motion between a corresponding human (the person drinking water) and a corresponding object (the cup) in the image to be detected, and the motion includes two sub-motions "raise the cup" and "drink water". Thus, by recognizing a motion between a human and an object, it may be determined that there is an interaction between the human and the object, and then a corresponding motion feature may be analyzed to determine a specific sub-motion that occurs between the human and the object.

In some embodiments, the image features of the image to be detected may be obtained, for example, based on an existing image feature extraction backbone network such as ResNet50 and ResNet101. In some embodiments, after the backbone network, a transformer encoder may be used to further extract an image feature. By using the above method, a single image feature corresponding to the image to be detected may be obtained, or a plurality of image features corresponding to the image to be detected may be obtained, which is not limited herein. In an exemplary embodiment, the image to be detected is processed by using the backbone network to obtain an image feature of a size of $H \times W \times C$ (i.e., a feature map), which is then expanded to obtain an image feature of a size of $C \times HW$ (i.e., HW one-dimensional image features with a length of C). These image features are input to the transformer encoder, and enhanced image features of the same size (i.e., the same number) may be obtained for further processing.

According to some embodiments, a pre-trained convolutional neural network may be used to process the image feature to obtain a first target feature for target detection. The first target feature may be further input to a pre-trained target detection sub-network to obtain a target included in the image to be detected and target information of the target.

According to some embodiments, a transformer decoder may be used to decode the image feature to obtain a decoded first target feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training.

According to some embodiments, step S202 of performing first target feature extraction on the plurality of image features to obtain a plurality of first target features may include: obtaining a plurality of pre-trained target-query features, i.e., features Q; and for each of the plurality of target-query features, determining a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

Similarly, another pre-trained convolutional neural network may be used to process the image feature to obtain a plurality of first interaction features including human-object interaction information. The first interaction features may be used as the query features Q to continue querying the image feature, so as to obtain the motion feature including motion information between the human and the object.

According to some embodiments, another transformer decoder may be used to decode the image feature to obtain a decoded first interaction feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, step S203 of performing first interaction feature extraction on the plurality of image features to obtain a plurality of first interaction features and a score of each of the plurality of first interaction features may include: obtaining a plurality of pre-trained interaction-query features; for each of the plurality of interaction-query features, determining a first interaction feature corresponding to the interaction-query feature based on a query result of the interaction-query feature for the plurality of image-key features and based on the plurality of image-value features; and processing each of the plurality of first interaction features to obtain a score of the first interaction feature.

Therefore, by using the interaction-query features, the plurality of image-key features may be queried for image-value features that are more likely to include motion information. It should be noted that the features Q as the interaction-query features may be different from the features Q as the target-query features above. In some embodiments, a plurality of transformer decoders may also be cascaded to enhance the first interaction feature.

According to some embodiments, the score of the first interaction feature may be a probability of the first interaction feature including motion information. In an exemplary embodiment, $z_i \in [0,1]$ may be used to represent a score of an $i^{th}$ first interaction feature of the plurality of first interaction features.

According to some embodiments, a multi-layer perceptron may be trained for processing the first interaction feature to determine the score of the first interaction feature, or another manner may be used to determine the score of each first interaction feature, which is not limited herein.

After a plurality of first interaction features and corresponding scores are obtained, these first interaction features may be screened to select at least some first interaction features that are most likely to have motion information.

According to some embodiments, the at least some first interaction features include at least one of the following: a predetermined number of first interaction features with the highest score; a predetermined proportion of first interaction features with the highest score; and a first interaction feature with a score exceeding a predetermined threshold. In an exemplary embodiment, a Top-K manner may be used to screen a plurality of first interaction features. It can be understood that, those skilled in the art may further use another manner to screen the plurality of first interaction features, which is not limited herein. Thus, by selecting some first interaction features with the highest score, the number of features to be processed in a subsequent motion recognition task can be reduced, and quality of the first interaction features that are input to the motion recognition task is improved.

After screening at least some first interaction features, these first interaction features and the image features may be further processed to obtain a plurality of first motion features. In some embodiments, the first interaction feature and the image feature may be fused, or models such as a multi-layer perceptron or a convolutional neural network may be trained to process the first interaction feature and the image feature, or another manner may be used to process the first interaction feature and the image feature to obtain the first motion feature, which is not limited herein.

According to some embodiments, a transformer decoder may be used to decode the image feature by using the first interaction feature to obtain s decoded first interaction feature. Step S205 of determining a plurality of first motion features based on the at least some first interaction features and the plurality of image features may include: for each of the at least some first interaction features, determining a first motion feature corresponding to the first interaction feature based on a query result of the first interaction feature for the plurality of image-key features and based on the plurality of image-value features. Thus, by using a method based on the transformer decoder for querying, a motion feature including corresponding human interaction motion information may be obtained, and the feature can be enhanced by using a self-attention mechanism, so that the accuracy of the subsequent motion recognition task and the accuracy of an output result of a human-object interaction detection task can be improved.

According to some embodiments, for each of the at least some first interaction features, the determining a first motion feature corresponding to the first interaction feature based on a query result of the first interaction feature for the plurality of image-key features and based on the plurality of image-value features may include: taking the at least some first interaction features as query features Q of the transformer decoder, and taking a plurality of image-key features and a plurality of corresponding image-value features as key features K and value features V of the transformer decoder to obtain a plurality of first motion features output from the transformer decoder.

After being obtained, the plurality of first motion features and the plurality of first target features may be processed separately to obtain motion information of at least one motion and target information of a plurality of targets in the image to be detected.

According to some embodiments, the target information may include, for example, a type of a corresponding target, a detection frame surrounding the corresponding target, and a confidence level. In some embodiments, step S206 of processing the plurality of target features may include, for example, using a multi-layer perceptron to regress a location, a classification class, and a corresponding confidence level of an object.

According to some embodiments, each of the one or more motions may include at least one sub-motion between a corresponding human target and a corresponding object target, and the motion information may include, for example, a type and a confidence level of each of the at least one sub-motion. In some embodiments, step S207 of processing the plurality of motion features may include, for example, using a multi-layer perceptron to process each motion feature to obtain a binary classification result corresponding to each sub-motion between a human and an object that are related to the motion feature and a corresponding confidence level.

It can be understood that those skilled in the art may select a corresponding target detection method and a corresponding motion recognition method by themselves to process the target feature and the motion feature to obtain a desired target detection result and motion recognition result, which is not limited herein.

According to some embodiments, step S208 of matching the plurality of targets with the one or more motions may be performed, for example, by calculating a similarity between target features corresponding to the plurality of targets and motion features corresponding to one or more motions, or by calculating a similarity between a corresponding target feature and a corresponding interaction feature, or may be performed based on another manner, which is not limited herein.

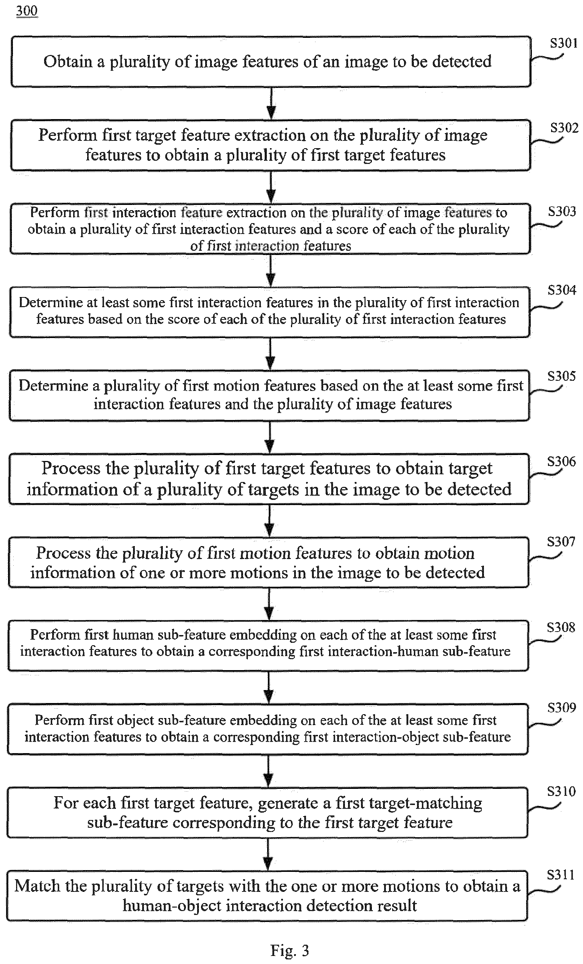

According to some embodiments, as shown in FIG. 3, the human-object interaction detection method may further include: step S308: performing first human sub-feature embedding on each of the at least some first interaction features to obtain a corresponding first interaction-human sub-feature; and step S309: performing first object sub-feature embedding on each of the at least some first interaction features to obtain a corresponding first interaction-object sub-feature. Operations of step S301 to step S307 and an operation of step S311 in FIG. 3 are respectively similar to those of step S201 to step S208 in FIG. 2. Details are not described herein again.

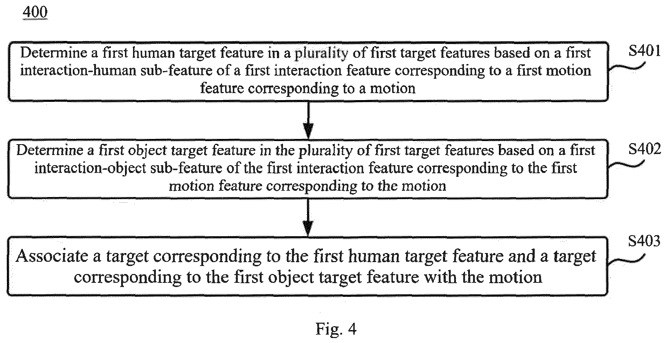

According to some embodiments, as shown in FIG. 4, step S311 of matching the plurality of targets with the one or more motions may include: step S401: for each of the one or more motions, determining a first human target feature in the plurality of first target features based on a first interaction-human sub-feature of a first interaction feature corresponding to a first motion feature corresponding to the motion; step S402: determining a first object target feature in the plurality of first target features based on a first interaction-object sub-feature of the first interaction feature corresponding to the first motion feature corresponding to the motion; and step S403: associating a target corresponding to the first human target feature and a target corresponding to the first object target feature with the motion.

Thus, an interaction feature is embedded to obtain a human sub-feature and an object sub-feature, a target most related to the human sub-feature is determined as a corresponding human target, and a target most related to the object sub-feature is determined as a corresponding object target, so as to match a motion corresponding to the interaction feature with the target corresponding to the interaction feature.

According to some embodiments, the first human sub-feature embedding and the first object sub-feature embedding each may be implemented, for example, by using a multi-layer perceptron (MLP), but the two embeddings use different parameters. The first interaction-human sub-feature may be represented as, for example, $e_i^h \in R^d$, the first interaction-object sub-feature may be represented as, for example, $e_i^o \in R^d$, where $d$ is a length of a feature vector, and i represents each motion feature. It should be noted that feature vectors of the two sub-features have the same length.

According to some embodiments, as shown in FIG. 3, the human-object interaction detection method may further include: step S310: for each first target feature, generating a first target-matching sub-feature corresponding to the first target feature. Step S401 of determining a first human target feature in the plurality of first target features may include: determining the first human target feature in a plurality of first target-matching sub-features corresponding to the plurality of first target features based on the first interaction-human sub-feature of the first interaction feature corresponding to the first motion feature corresponding to the motion. Step S402 of determining a first object target feature in the plurality of first target features may include: determining the first object target feature in the plurality of first target-matching sub-features corresponding to the plurality of first target features based on the first interaction-object sub-feature of the first interaction feature corresponding to the first motion feature corresponding to the motion.

Thus, a target feature is embedded to obtain a matching sub-feature to match a human sub-feature and an object sub-feature, such that a target detection task and a task of matching the target with the motion use different feature vectors, to avoid interference to improve the accuracy of the two tasks.

According to some embodiments, for each first target feature, a first target-matching sub-feature corresponding to the first target feature may also be generated by using the multi-layer perceptron (MLP) for embedding, but parameters used herein are different from the parameters used for the first human sub-feature embedding and the first object sub-feature embedding. In an exemplary embodiment, the first target-matching sub-feature may be represented as $\mu_j \in R^d$, where $d$ is a length of a feature vector, $j$ represents each target feature, and the matching sub-feature, the above human sub-feature, and the above object sub-feature have the same length.

According to some embodiments, in step S401, determining a first at least one first target feature may include: determining the first at least one first target feature based on a similarity between the corresponding first interaction-human sub-feature and each of the plurality of first target features. In step S402, determining a second at least one first target feature may include: determining the second at least one first target feature based on a similarity between the corresponding first interaction-object sub-feature and each of the plurality of first target features. It can be understood that those skilled in the art may use, according to needs, another method to determine the first at least one first target feature and the second at least one first target feature in the plurality of first targets. For example, a neural network may be used to process a corresponding human sub-feature, a corresponding object sub-feature, and a corresponding first target feature, to calculate relevance and so on, which is not limited herein.

In an exemplary embodiment, the first at least one first target feature may include only one first target feature, and the second at least one first target feature may also include only one first target feature. Determination processes of step S401 and step S402 may be expressed by the following formulas:

$$m_i^h = argmax_j (e_i^h)^T \mu_j$$

$$m_i^o = argmax_j (e_i^o)^T \mu_j$$

Here, $m_i^h$ and $m_i^o$ are a target corresponding to the human sub-feature determined based on the first motion feature and a target corresponding to the object sub-feature determined based on the first motion feature.

According to some embodiments, step S311 of matching the plurality of targets with the one or more motions may further include: determining a score of a corresponding human-object interaction detection result based on a confidence level of a corresponding human target, a confidence level of a corresponding object target, a confidence level of a corresponding motion, and a score of a first interaction feature corresponding to a first motion feature corresponding to the corresponding motion that are obtained through matching. Thus, a final score of the matching result is determined based on a confidence level or a score of each of a corresponding human target, object target, motion, and interaction that is obtained through matching.

According to some embodiments, the confidence level of the corresponding human target, the confidence level of the corresponding object target, the confidence level of the corresponding motion, and the score of the first interaction feature corresponding to the first motion feature corresponding to the corresponding motion may be multiplied to obtain a corresponding score of the human-object interaction detection result. By multiplying confidence levels of output results of a plurality of intermediate tasks such as interaction detection, motion recognition, and target detection, a confidence level of a final output matching result can be obtained, and based on the confidence level of the matching result, it is determined that whether there is a corresponding sub-motion between a corresponding human target and a corresponding object target. It can be understood that those skilled in the art may set rules by themselves to make a related determination and output a final human-object interaction detection result, which is not limited herein.

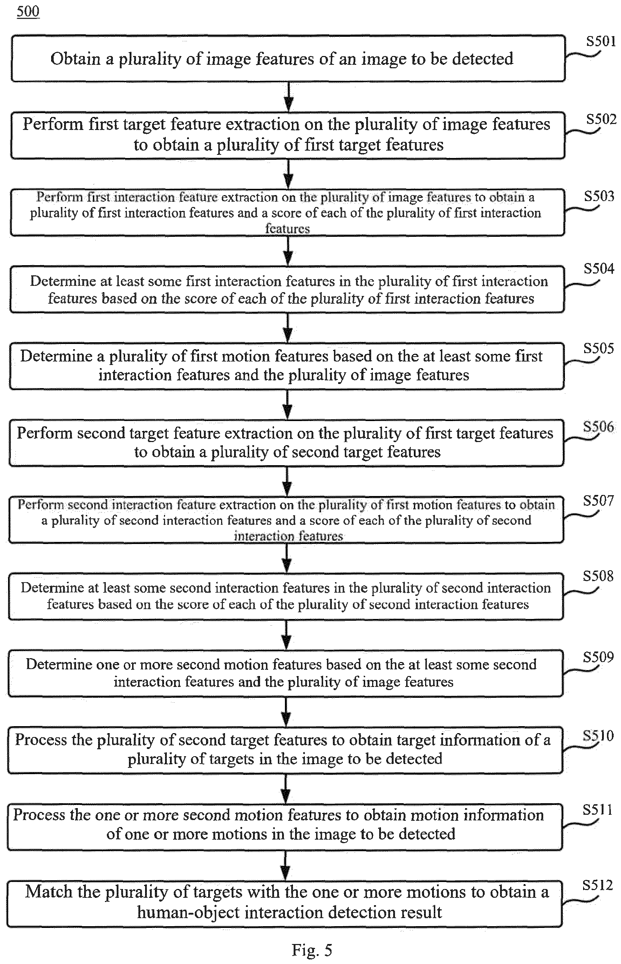

According to some embodiments, during extraction of a target feature, a plurality of rounds of feature extraction operations may be performed to enhance target-related information in the target feature. As shown in FIG. 5, the human-object interaction detection method may further include: step S506: performing second target feature extraction on the plurality of first target features to obtain a plurality of second target features. It can be understood that operations of step S501 to step S505 and operations of step S510 to step S512 in FIG. 5 are similar to those of step S201 to step S208 in FIG. 2. Details are not described herein again.

According to some embodiments, step S510 of processing the plurality of first target features may include: processing the plurality of second target features. Thus, through a second round of enhancement of the target feature, the target feature can be further enhanced to improve the accuracy of the result output from the target detection task and the accuracy of the final human-object interaction detection result.

According to some embodiments, during extraction of a motion feature, a plurality of rounds of feature screening and extraction operations may be performed to screen features that are more likely to have motion-related information, and enhance the motion-related information in the motion feature. As shown in FIG. 5, the human-object interaction detection method may further include: step S507: performing second interaction feature extraction on the plurality of first motion features to obtain a plurality of second interaction features and a score of each of the plurality of second interaction features; step S508: determining at least some second interaction features in the plurality of second interaction features based on the score of each of the plurality of second interaction features; and step S509: determining one or more second motion features based on the at least some second interaction features and the plurality of image features.

According to some embodiments, step S511 of processing the plurality of first motion features may include: processing the one or more second motion features. Thus, through the second round of screening and enhancement of interaction features and target features, motion features that are more likely to have motion information can be obtained, so as to improve the accuracy of the result output from the motion recognition task and the accuracy of the final human-object interaction detection result.

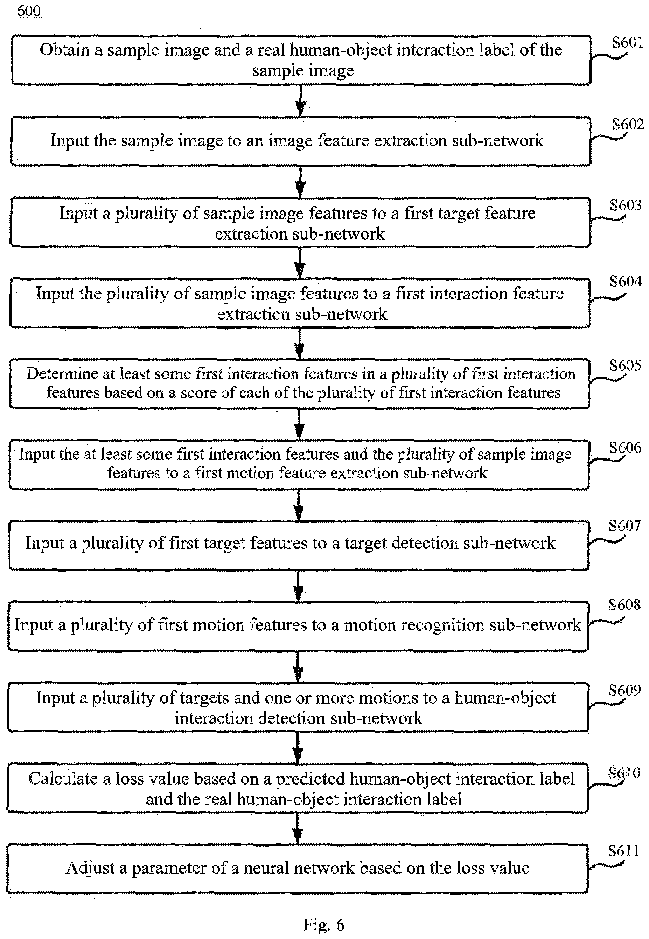

According to another aspect of the present disclosure, there is provided a training method for a neural network. The neural network includes an image feature extraction sub-network, a first target feature extraction sub-network, a first interaction feature extraction sub-network, a first motion feature extraction sub-network, a target detection sub-network, a motion recognition sub-network, and a human-object interaction detection sub-network. As shown in FIG. 6, the training method for a neural network includes: step S601: obtaining a sample image and a ground truth human-object interaction label of the sample image; step S602: inputting the sample image to the image feature extraction sub-network to obtain a plurality of sample image features; step S603: inputting the plurality of sample image features to the first target feature extraction sub-network to obtain a plurality of first target features; step S604: inputting the plurality of sample image features to the first interaction feature extraction sub-network, where the first interaction feature extraction sub-network is configured to receive the plurality of sample image features to output a plurality of first interaction features and a score of each of the plurality of first interaction features; step S605: determining at least some first interaction features in the plurality of first interaction features based on the score of each of the plurality of first interaction features; step S606: inputting the at least some first interaction features and the plurality of sample image features to the first motion feature extraction sub-network, where the first motion feature extraction sub-network is configured to receive the at least some first interaction features and the plurality of sample image features to output a plurality of first motion features; step S607: inputting the plurality of first target features to the target detection sub-network, where the target detection sub-network is configured to receive the plurality of first target features to output target information of a plurality of targets in the sample image, where the plurality of targets include one or more human targets and one or more object targets; step S608: inputting the plurality of first motion features to the motion recognition sub-network, where the motion recognition sub-network is configured to receive the plurality of first motion features to output motion information of one or more motions in the sample image, where each of the one or more motions is associated with one of the one or more human targets, and one of the one or more object targets; step S609: inputting the plurality of targets and the one or more motions to the human-object interaction detection sub-network to obtain a predicted human-object interaction label; step S610: calculating a loss value based on the predicted human-object interaction label and the ground truth human-object interaction label; and step S611: adjusting a parameter of the neural network based on the loss value. It can be understood that operations on the sample image in step S602 to step S609 in FIG. 6 are similar to operations on the image to be detected in step S201 to step S208 in FIG. 2, and the operations of each of step S201 to step S208 may be implemented by a neural network or a sub-neural network having a corresponding function. Therefore, these steps in FIG. 6 are not described herein again.

Thus, two tasks of human-object interaction detection and motion recognition are decoupled, a feature with the highest score and most likely to include human-object interaction motion information is first screened from the plurality of image features, and a human-object interaction motion in the sample image is determined based on the feature, so that a recall rate of the result of the motion recognition task obtained by the trained neural network can be improved, and a generalization capability of the human-object interaction detection method implemented by using the trained neural network can be improved.

According to some embodiments, the sample image may be, for example, any image that involves a human-object interaction. In some embodiments, the sample image may include a plurality of targets that include one or more human targets and one or more object targets. In addition, the sample image may further include one or more motions, and each motion is associated with one of the one or more human targets, and one of the one or more object targets. In some embodiments, the ground truth human-object interaction label of the sample image is manually annotated.

In some embodiments, the image feature of the sample image may be obtained, for example, based on an existing image feature extraction backbone network such as ResNet50 and ResNet101. In some embodiments, after the backbone network, a transformer encoder may be used to further extract an image feature. By using the above method, a single image feature corresponding to the sample image may be obtained, and a plurality of image features corresponding to the sample image may also be obtained, which is not limited herein. In an exemplary embodiment, the sample image is processed by using the backbone network to obtain an image feature of a size of H × W × C (i.e., a feature map), which is then expanded to obtain an image feature of a size of C × HW (i.e., HW one-dimensional image features with a length of C). These image features are input to the transformer encoder, and enhanced image features of the same size (i.e., the same number) may be obtained for further processing.

According to some embodiments, a transformer decoder may be used to decode the image feature to obtain a decoded first target feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training.

According to some embodiments, the first motion feature extraction sub-network may be further configured to: obtain a plurality of pre-trained target-query features, i.e., features Q; and for each of the plurality of target-query features, determine a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

According to some embodiments, another transformer decoder may be used to decode the image feature to obtain a decoded first interaction feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, the first interaction feature extraction sub-network may be further configured to: obtain a plurality of pre-trained interaction-query features; for each of the plurality of interaction-query features, determine a first interaction feature corresponding to the interaction-query feature based on a query result of the interaction-query feature for the plurality of image-key features and based on the plurality of image-value features; and process each of the plurality of first interaction features to obtain a score of the first interaction feature.

Therefore, by using the interaction-query features, the plurality of image-key features may be queried for image-value features that are more likely to include motion information. It should be noted that the features Q as the interaction-query features may be different from the features Q as the target-query features above. In some embodiments, a plurality of transformer decoders may also be cascaded to enhance the first interaction feature.

According to some embodiments, the score of the first interaction feature may be a probability of the first interaction feature including motion information. In an exemplary embodiment, $z_i \in [0,1]$ may be used to represent a score of an $i^{th}$ first interaction feature of the plurality of first interaction features.

According to some embodiments, a multi-layer perceptron may be trained for processing the first interaction feature to determine the score of the first interaction feature, or another manner may be used to determine the score of each first interaction feature, which is not limited herein.

After a plurality of first interaction features and corresponding scores are obtained, these first interaction features may be screened to select at least some first interaction features that are most likely to have motion information.

According to some embodiments, the at least some first interaction features include at least one of the following: a predetermined number of first interaction features with the highest score; a predetermined proportion of first interaction features with the highest score; and a first interaction feature with a score exceeding a predetermined threshold. In an exemplary embodiment, a Top-K manner may be used to screen a plurality of first interaction features. It can be understood that those skilled in the art may set a corresponding predetermined number, a predetermined proportion, and a predetermined threshold by themselves, or may use another manner to screen the plurality of first interaction features, which is not limited herein. Thus, by selecting some first interaction features with the highest score, the number of features to be processed in a subsequent motion recognition task can be reduced, and quality of the first interaction features that are input to the motion recognition task is improved.

After screening at least some first interaction features, these first interaction features and the image features may be further processed to obtain a plurality of first motion features. In some embodiments, the first interaction feature and the image feature may be fused, or models such as a multi-layer perceptron or a convolutional neural network may be trained to process the first interaction feature and the image feature, or another manner may be used to process the first interaction feature and the image feature to obtain the first motion feature, which is not limited herein.

According to some embodiments, a transformer decoder may be used to decode the image feature by using the first interaction feature to obtain s decoded first interaction feature. The first motion feature extraction sub-network may be further configured to: for each of the at least some first interaction features, determine a first motion feature corresponding to the first interaction feature based on a query result of the first interaction feature for the plurality of image-key features and based on the plurality of image-value features. Thus, by using a method based on the transformer decoder for querying, a motion feature including corresponding human interaction motion information may be obtained, and the feature can be enhanced by using a self-attention mechanism, so that the accuracy of the subsequent motion recognition task and the accuracy of an output result of a human-object interaction detection task can be improved.

According to some embodiments, for each of the at least some first interaction features, the determining a first motion feature corresponding to the first interaction feature based on a query result of the first interaction feature for the plurality of image-key features and based on the plurality of image-value features may include: taking the at least some first interaction features as query features Q of the transformer decoder, and taking a plurality of image-key features and a plurality of corresponding image-value features as key features K and value features V of the transformer decoder to obtain a plurality of first motion features output from the transformer decoder.

After being obtained, the plurality of first motion features and the plurality of first target features may be processed separately to obtain motion information of at least one motion and target information of a plurality of targets in the image to be detected.

According to some embodiments, the target detection sub-network may be any sub-network capable of implementing the target detection task, including various traditional models and neural network models. It can be understood that those skilled in the art may select an appropriate existing model as the target detection sub-network according to needs, or may design the target detection sub-network by themselves, which is not limited herein.

The target detection sub-network can output, based on the input target feature, the target information of the targets included in the sample image. According to some embodiments, the target information may include, for example, a type of a corresponding target, a detection frame surrounding the corresponding target, and a confidence level. In some embodiments, the target detection sub-network may be configured to use a multi-layer perceptron to regress a location, a classification class, and a corresponding confidence level of a target.

According to some embodiments, the motion recognition sub-network may be any sub-network capable of implementing the motion recognition task, including various traditional models and neural network models. It can be understood that those skilled in the art may select an appropriate existing model as the motion recognition sub-network according to needs, or may design the motion recognition sub-network by themselves, which is not limited herein.

The motion recognition sub-network can output, based on the input motion feature, the motion information of the motions included in the sample image. According to some embodiments, each of the one or more motions may include at least one sub-motion between a corresponding human target and a corresponding object target, and the motion information may include, for example, a type and a confidence level of each of the at least one sub-motion. In some embodiments, the motion recognition sub-network may be configured to use a multi-layer perceptron to process each motion feature to obtain a binary classification result corresponding to each sub-motion between a human and an object that are related to the motion feature and a corresponding confidence level.

It can be understood that those skilled in the art may select a corresponding target detection sub-network and a corresponding motion recognition sub-network by themselves to process the target feature and the motion feature to obtain a desired target detection result and motion recognition result, which is not limited herein.

According to some embodiments, the human-object interaction detection sub-network may be configured to calculate a similarity between a target feature corresponding to each of the plurality of targets and a motion feature corresponding to each of the one or more motions, or may be configured to calculate a similarity between the corresponding target feature and the corresponding interaction feature, or may be configured to match a target with a motion based on another manner, which is not limited herein.

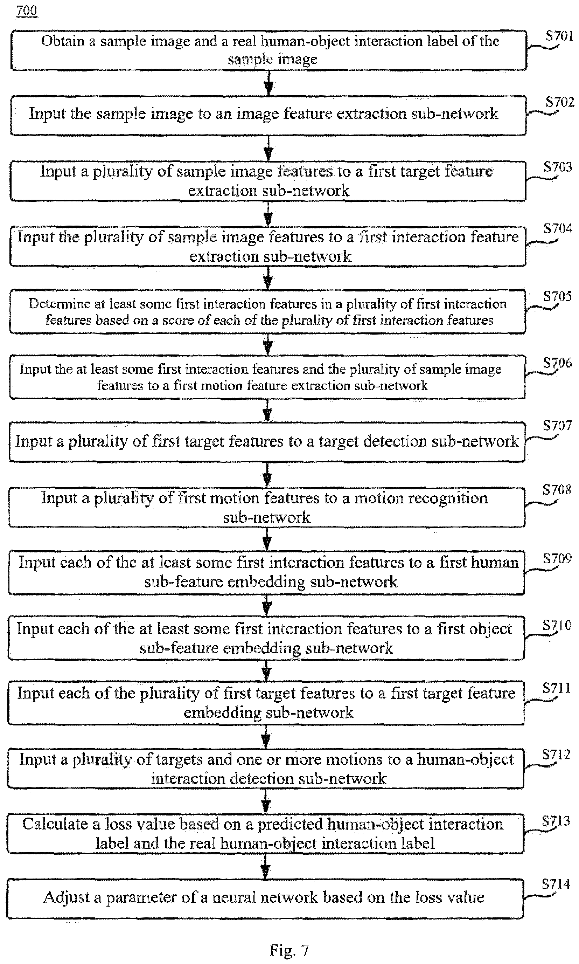

According to some embodiments, the neural network may further include a first human sub-feature embedding sub-network and a first object sub-feature embedding sub-network. As shown in FIG. 7, the training method may further include: step S709: inputting each of the at least some first interaction features to the first human sub-feature embedding sub-network, where the first human sub-feature embedding sub-network is configured to receive the first interaction feature to obtain a corresponding first interaction-human sub-feature; and step S710: inputting each of the at least some first interaction features to the first object sub-feature embedding sub-network, where the first object sub-feature embedding sub-network is configured to receive the first interaction feature to obtain a corresponding first interaction-object sub-feature. Operations of step S701 to step S708 and operations of step S712 to step S714 in FIG. 7 are respectively similar to those of step S601 to step S611 in FIG. 6. Details are not described herein again.

According to some embodiments, the human-object interaction detection sub-network may be further configured to: for each of the one or more motions, determine a first human target feature in the plurality of first target features based on a first interaction-human sub-feature of a first interaction feature corresponding to a first motion feature corresponding to the motion; determine a first object target feature in the plurality of first target features based on a first interaction-object sub-feature of the first interaction feature corresponding to the first motion feature corresponding to the motion; and associate a target corresponding to the first human target feature and a target corresponding to the first object target feature with the motion.

Thus, an interaction feature is embedded to obtain a human sub-feature and an object sub-feature, a target most related to the human sub-feature is determined as a corresponding human target, and a target most related to the object sub-feature is determined as a corresponding object target, so as to match a motion corresponding to the interaction feature with the target corresponding to the interaction feature.

According to some embodiments, as shown in FIG. 7, the training method may further include: step S711: inputting each of the plurality of first target features to the first target feature embedding sub-network, where the first target feature embedding sub-network is configured to receive the first target feature to obtain a corresponding first target-matching sub-feature. The determining a first human target feature in the plurality of first target features may include: determining the first human target feature in a plurality of first target-matching sub-features corresponding to the plurality of first target features based on the first interaction-human sub-feature of the first interaction feature corresponding to the first motion feature corresponding to the motion. The determining a first object target feature in the plurality of first target features may include: determining the first object target feature in the plurality of first target-matching sub-features corresponding to the plurality of first target features based on the first interaction-object sub-feature of the first interaction feature corresponding to the first motion feature corresponding to the motion.

Thus, a target feature is embedded to obtain a matching sub-feature to match a human sub-feature and an object sub-feature, such that a target detection task and a task of matching the target with the motion use different feature vectors, to avoid interference to improve the accuracy of the two tasks.

According to some embodiments, the determining a first at least one first target feature may include: determining the first at least one first target feature based on a similarity between the corresponding first interaction-human sub-feature and each of the plurality of first target features. The determining a second at least one first target feature may include: determining the second at least one first target feature based on a similarity between the corresponding first interaction-object sub-feature and each of the plurality of first target features. It can be understood that those skilled in the art may use, according to needs, another method to determine the first at least one first target feature and the second at least one first target feature in the plurality of first targets. For example, a neural network may be used to process a corresponding human sub-feature, a corresponding object sub-feature, and a corresponding first target feature, to calculate relevance and so on, which is not limited herein.

According to some embodiments, the human-object interaction detection sub-network can output a corresponding detection result, i.e., the predicted human-object interaction label. This result can represent a plurality of sets of motions between a human and an object that are detected in the sample image. In some embodiments, each set of motions in the human-object interaction detection result includes a bounding box and a confidence level of a corresponding human target, a bounding box and a confidence level of a corresponding object target, and a type and a confidence level of at least one sub-motion between the human target and the object target.

According to some embodiments, the human-object interaction detection sub-network may be further configured to: determine a score of a corresponding human-object interaction detection result based on a confidence level of a corresponding human target, a confidence level of a corresponding object target, a confidence level of a corresponding motion, and a score of a first interaction feature corresponding to a first motion feature corresponding to the corresponding motion that are obtained through matching. Thus, a final score of the matching result is determined based on a confidence level or a score of each of a corresponding human target, object target, motion, and interaction that is obtained through matching.

According to some embodiments, the confidence level of the corresponding human target, the confidence level of the corresponding object target, the confidence level of the corresponding motion, and the score of the first interaction feature corresponding to the first motion feature corresponding to the corresponding motion may be multiplied to obtain a corresponding score of the human-object interaction detection result. By multiplying confidence levels of output results of a plurality of intermediate tasks such as interaction detection, motion recognition, and target detection, a confidence level of a final output matching result can be obtained, and based on the confidence level of the matching result, it is determined that whether there is a corresponding sub-motion between a corresponding human target and a corresponding object target. It can be understood that those skilled in the art may set rules by themselves to make a related determination and output a final human-object interaction detection result, which is not limited herein.

According to some embodiments, after obtaining the human-object interaction detection result, i.e., the predicted human-object interaction label, the loss value may be calculated based on the predicted human-object interaction label and the ground truth human-object interaction label, and the parameter of each sub-network in the neural network described above may be further adjusted based on the loss value. In some embodiments, a plurality of batches and rounds of training may be performed using a plurality of samples until the neural network converges. In some embodiments, some of sub-networks in the neural network may be pre-trained, individually trained, or trained in combination to optimize an overall training process. It can be understood that those skilled in the art may further use another method to train the neural network and a sub-network thereof, which is not limited herein.

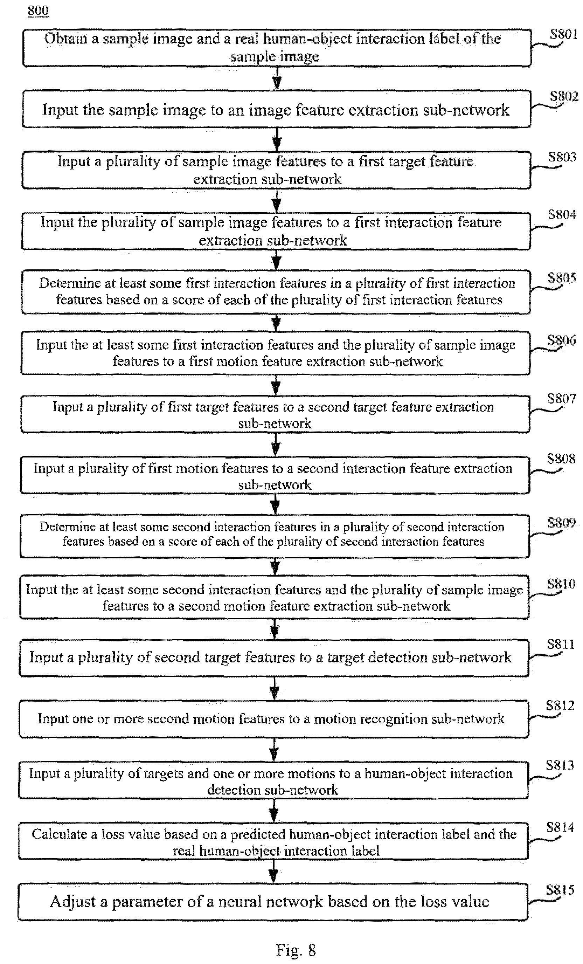

According to some embodiments, during extraction of a target feature, a plurality of rounds of feature extraction operations may be performed to enhance target-related information in the target feature. As shown in FIG. 8, the human-object interaction detection method may further include: step S807: inputting the plurality of first target features to the second target feature extraction sub-network to obtain a plurality of second target features. It can be understood that operations of step S801 to step S806 and operations of step S811 to step S815 in FIG. 8 are similar to those of step S601 to step S611 in FIG. 6. Details are not described herein again.

According to some embodiments, step S812 of inputting the plurality of first motion features to the motion recognition sub-network may include: inputting the one or more second motion features to the motion recognition sub-network. The motion recognition sub-network may be further configured to receive the one or more second motion features to output the motion information of the one or more motions in the sample image.

Thus, through a second round of enhancement of the target feature, the target feature can be further enhanced to improve the accuracy of an intermediate result output from the trained neural network performing a target detection intermediate task and the accuracy of a final output human-object interaction detection result.

According to some embodiments, during extraction of a motion feature, a plurality of rounds of feature screening and extraction operations may be performed to screen features that are more likely to have motion-related information, and enhance the motion-related information in the motion feature. As shown in FIG. 8, the human-object interaction detection method may further include: step S808: inputting the plurality of first motion features to the second interaction feature extraction sub-network to obtain a plurality of second interaction features and a score of each of the plurality of second interaction features; step S809: determining at least some second interaction features in the plurality of second interaction features based on the score of each of the plurality of second interaction features; and step S810: inputting the at least some second interaction features and the plurality of sample image features to the second motion feature extraction sub-network to obtain one or more second motion features.

According to some embodiments, step S812 of inputting the plurality of first motion features to the motion recognition sub-network may include: inputting the one or more second motion features to the motion recognition sub-network. The motion recognition sub-network may be further configured to receive the one or more second motion features to output the motion information of the one or more motions in the sample image. Thus, through the second round of screening and enhancement of interaction features and target features, motion features that are more likely to have motion information can be obtained, so as to improve the accuracy of an intermediate result output from the trained neural network performing a motion recognition intermediate task and the accuracy of a final output human-object interaction detection result.

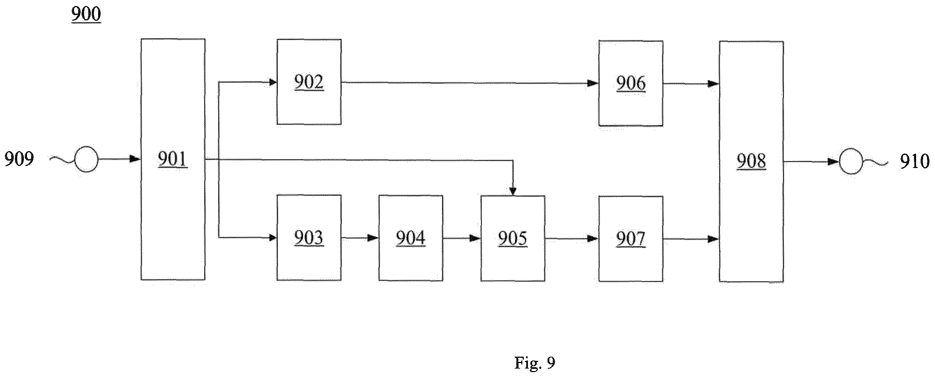

According to another aspect of the present disclosure, there is further provided a neural network for human-object interaction detection. As shown in FIG. 9, a neural network 900 includes: an image feature extraction sub-network 901 configured to receive an image 909 to be detected to output a plurality of image features of the image to be detected; a first target feature extraction sub-network 902 configured to receive the plurality of image features to output a plurality of first target features; a first interaction feature extraction sub-network 903 configured to receive the plurality of image features to output a plurality of first interaction features and a score of each of the plurality of first interaction features; a first screening sub-network 904 configured to determine at least some first interaction features in the plurality of first interaction features based on the score of each of the plurality of first interaction features; a first motion feature extraction sub-network 905 configured to receive the at least some first interaction features and the plurality of image features to output a plurality of first motion features; a target detection sub-network 906 configured to receive the plurality of first target features to output target information of a plurality of targets in the image to be detected, where the plurality of targets include one or more human targets and one or more object targets; a motion recognition sub-network 907 configured to receive the plurality of first motion features to output motion information of one or more motions in the image to be detected, where each of the one or more motions is associated with one of the one or more human targets, and one of the one or more object targets; and a human-object interaction detection sub-network 908 configured to receive the plurality of targets and the one or more motions to output a human-object interaction detection result 910. It can be understood that operations of the sub-network 901 to the sub-network 908 in the neural network 900 are similar to those of step S201 to step S208 in FIG. 2. Details are not described herein again.

Thus, two tasks of human-object interaction detection and motion recognition are decoupled, a feature with the highest score and most likely to include human-object interaction motion information is first screened from the plurality of image features, and a human-object interaction motion in the image to be detected is determined based on the feature, so that a recall rate of the motion recognition task can be improved, and a generalization capability of the human-object interaction detection method can be improved.

According to some embodiments, the image to be detected may be, for example, any image that involves a human-object interaction. In some embodiments, the image to be detected may include a plurality of targets that include one or more human targets and one or more object targets. In addition, the image to be detected may further include one or more motions, and each motion is associated with one of the one or more human targets, and one of the one or more object targets.

In some embodiments, the image feature extraction sub-network 901 may be based on, for example, an existing image feature extraction backbone network such as ResNet50 and ResNet101. In some embodiments, the image feature extraction sub-network 901 may further include a transformer encoder after the backbone network to further extract an image feature. By using the above method, a single image feature corresponding to the image to be detected may be obtained, or a plurality of image features corresponding to the image to be detected may be obtained, which is not limited herein. In an exemplary embodiment, the image to be detected is processed by using the backbone network to obtain an image feature of a size of H × W × C (i.e., a feature map), which is then expanded to obtain an image feature of a size of C × HW (i.e., HW one-dimensional image features with a length of C). These image features are input to the transformer encoder, and enhanced image features of the same size (i.e., the same number) may be obtained for further processing.

According to some embodiments, a transformer decoder may be used as the first target feature extraction sub-network 902 to decode the image feature to obtain a decoded first target feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training.

According to some embodiments, the first target feature extraction sub-network 902 may be further configured to: obtain a plurality of pre-trained target-query features, i.e., features Q; and for each of the plurality of target-query features, determine a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

According to some embodiments, another transformer decoder may be used as the first interaction feature extraction sub-network 903 to decode the image feature to obtain a decoded first interaction feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, the first interaction feature extraction sub-network 903 may be further configured to: obtain a plurality of pre-trained interaction-query features; for each of the plurality of interaction-query features, determine a first interaction feature corresponding to the interaction-query feature based on a query result of the interaction-query feature for the plurality of image-key features and based on the plurality of image-value features; and process each of the plurality of first interaction features to obtain a score of the first interaction feature.

Therefore, by using the interaction-query features, the plurality of image-key features may be queried for image-value features that are more likely to include motion information. It should be noted that the features Q as the interaction-query features may be different from the features Q as the target-query features above. In some embodiments, a plurality of transformer decoders may also be cascaded to enhance the first interaction feature.

According to some embodiments, the score of the first interaction feature may be a probability of the first interaction feature including motion information. In an exemplary embodiment, $z_i \in [0,1]$ may be used to represent a score of an $i^{th}$ first interaction feature of the plurality of first interaction features.

According to some embodiments, a multi-layer perceptron may be trained for processing the first interaction feature to determine the score of the first interaction feature, or another manner may be used to determine the score of each first interaction feature, which is not limited herein.

After a plurality of first interaction features and corresponding scores are obtained, these first interaction features may be screened by using the first screening sub-network 904 to select at least some first interaction features that are most likely to have motion information.

According to some embodiments, the at least some first interaction features include at least one of the following: a predetermined number of first interaction features with the highest score; a predetermined proportion of first interaction features with the highest score; and a first interaction feature with a score exceeding a predetermined threshold. In an exemplary embodiment, a Top-K manner may be used to screen a plurality of first interaction features. It can be understood that, those skilled in the art may further use another manner to screen the plurality of first interaction features, which is not limited herein. Thus, by selecting some first interaction features with the highest score, the number of features to be processed in a subsequent motion recognition task can be reduced, and quality of the first interaction features that are input to the motion recognition task is improved.

After screening at least some first interaction features, these first interaction features and the image features may be further processed to obtain a plurality of first motion features. In some embodiments, the first interaction feature and the image feature may be fused, or models such as a multi-layer perceptron or a convolutional neural network may be trained to process the first interaction feature and the image feature, or another manner may be used to process the first interaction feature and the image feature to obtain the first motion feature, which is not limited herein.

According to some embodiments, a transformer decoder may be used as the first motion feature extraction sub-network 905 to decode the image feature by using the first interaction feature to obtain a decoded first interaction feature. The first motion feature extraction sub-network 905 may be further configured to: for each of the at least some first interaction features, determine a first motion feature corresponding to the first interaction feature based on a query result of the first interaction feature for the plurality of image-key features and based on the plurality of image-value features. Thus, by using a method based on the transformer decoder for querying, a motion feature including corresponding human interaction motion information may be obtained, and the feature can be enhanced by using a self-attention mechanism, so that the accuracy of the subsequent motion recognition task and the accuracy of an output result of a human-object interaction detection task can be improved.

According to some embodiments, for each of the at least some first interaction features, the determining a first motion feature corresponding to the first interaction feature based on a query result of the first interaction feature for the plurality of image-key features and based on the plurality of image-value features may include: taking the at least some first interaction features as query features Q of the transformer decoder, and taking a plurality of image-key features and a plurality of corresponding image-value features as key features K and value features V of the transformer decoder to obtain a plurality of first motion features output from the transformer decoder.

After being obtained, the plurality of first motion features and the plurality of first target features may be processed separately to obtain motion information of at least one motion and target information of a plurality of targets in the image to be detected.

According to some embodiments, the target detection sub-network 906 may be any sub-network capable of implementing the target detection task, including various traditional models and neural network models. It can be understood that those skilled in the art may select an appropriate existing model as the target detection sub-network according to needs, or may design the target detection sub-network by themselves, which is not limited herein.

The target detection sub-network can output, based on the input target feature, the target information of the targets included in the sample image. According to some embodiments, the target information may include, for example, a type of a corresponding target, a bounding box surrounding the corresponding target, and a confidence level. In some embodiments, the target detection sub-network 906 may be, for example, configured to use a multi-layer perceptron to regress a location, a classification class, and a corresponding confidence level of a target.

According to some embodiments, the motion recognition sub-network 907 may be any sub-network capable of implementing the motion recognition task, including various traditional models and neural network models. It can be understood that those skilled in the art may select an appropriate existing model as the motion recognition sub-network according to needs, or may design the motion recognition sub-network by themselves, which is not limited herein.

The motion recognition sub-network can output, based on the input motion feature, the motion information of the motions included in the sample image. According to some embodiments, each of the one or more motions may include at least one sub-motion between a corresponding human target and a corresponding object target, and the motion information may include, for example, a type and a confidence level of each of the at least one sub-motion. In some embodiments, the motion recognition sub-network 907 may be, for example, configured to use a multi-layer perceptron to process each motion feature to obtain a binary classification result corresponding to each sub-motion between a human and an object that are related to the motion feature and a corresponding confidence level.

It can be understood that those skilled in the art may select a corresponding target detection sub-network and a corresponding motion recognition sub-network by themselves to process the target feature and the motion feature to obtain a desired target detection result and motion recognition result, which is not limited herein.

According to some embodiments, the human-object interaction detection sub-network 908 may be configured to calculate a similarity between a target feature corresponding to each of the plurality of targets and a motion feature corresponding to each of the one or more motions, or may be configured to calculate a similarity between the corresponding target feature and the corresponding interaction feature, or may be configured to match a target with a motion based on another manner, which is not limited herein.

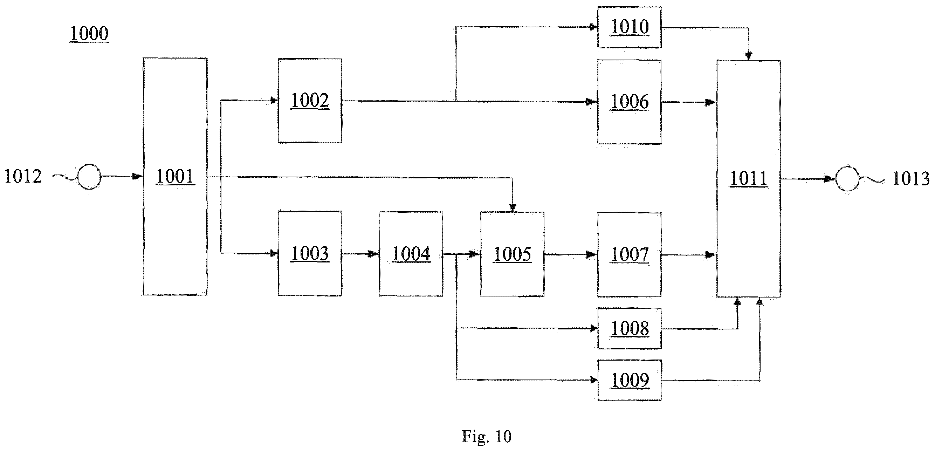

According to some embodiments, as shown in FIG. 10, a neural network 1000 may further include: a first human sub-feature embedding sub-network 1008 configured to receive the first interaction feature to output a corresponding first interaction-human sub-feature; and a first object sub-feature embedding sub-network 1009 configured to receive the first interaction feature to output a corresponding first interaction-object sub-feature. Operations of a sub-network 1001 to a sub-network 1007 and an operation of a sub-network 1011 in FIG. 10 are respectively similar to those of the sub-network 901 to the sub-network 908 in FIG. 9, and an input 1012 and an output 1013 are respectively similar to the input 909 and the output 910. Details are not described herein again.

According to some embodiments, the human-object interaction detection sub-network 1011 may be further configured to: for each of the one or more motions, determine a first human target feature in the plurality of first target features based on a first interaction-human sub-feature of a first interaction feature corresponding to a first motion feature corresponding to the motion; determine a first object target feature in the plurality of first target features based on a first interaction-object sub-feature of the first interaction feature corresponding to the first motion feature corresponding to the motion; and associate a target corresponding to the first human target feature and a target corresponding to the first object target feature with the motion.

Thus, an interaction feature is embedded to obtain a human sub-feature and an object sub-feature, a target most related to the human sub-feature is determined as a corresponding human target, and a target most related to the object sub-feature is determined as a corresponding object target, so as to match a motion corresponding to the interaction feature with the target corresponding to the interaction feature.

According to some embodiments, as shown in FIG. 10, the neural network 1000 may further include: a first target feature embedding sub-network 1010 configured to receive the first target feature to output a corresponding first target-matching sub-feature. The determining a first human target feature in the plurality of first target features may include: determining the first human target feature in a plurality of first target-matching sub-features corresponding to the plurality of first target features based on the first interaction-human sub-feature of the first interaction feature corresponding to the first motion feature corresponding to the motion. The determining a first object target feature in the plurality of first target features may include: determining the first object target feature in the plurality of first target-matching sub-features corresponding to the plurality of first target features based on the first interaction-object sub-feature of the first interaction feature corresponding to the first motion feature corresponding to the motion.

Thus, a target feature is embedded to obtain a matching sub-feature to match a human sub-feature and an object sub-feature, such that a target detection task and a task of matching the target with the motion use different feature vectors, to avoid interference to improve the accuracy of the two tasks.

According to some embodiments, the determining a first human target feature in the plurality of first target features may include: determining the first human target feature based on a similarity between the corresponding first interaction-human sub-feature and each of the plurality of first target features. The determining a first object target feature in the plurality of first target features may include: determining the first object target feature based on a similarity between the corresponding first interaction-object sub-feature and each of the plurality of first target features. It can be understood that those skilled in the art may use, according to needs, another method to determine the first at least one first target feature and the second at least one first target feature in the plurality of first targets. For example, a neural network may be used to process a corresponding human sub-feature, a corresponding object sub-feature, and a corresponding first target feature, to calculate relevance and so on, which is not limited herein.

According to some embodiments, the human-object interaction detection sub-network 1011 can output a corresponding detection result, i.e., the predicted human-object interaction label. This result can represent a plurality of sets of motions between a human and an object that are detected in the sample image. In some embodiments, each set of motions in the human-object interaction detection result includes a bounding box and a confidence level of a corresponding human target, a bounding box and a confidence level of a corresponding object target, and a type and a confidence level of at least one sub-motion between the human target and the object target.

According to some embodiments, the human-object interaction detection sub-network 1011 may be further configured to: determine a score of a corresponding human-object interaction detection result based on a confidence level of a corresponding human target, a confidence level of a corresponding object target, a confidence level of a corresponding motion, and a score of a first interaction feature corresponding to a first motion feature corresponding to the corresponding motion that are obtained through matching.

According to some embodiments, the confidence level of the corresponding human target, the confidence level of the corresponding object target, the confidence level of the corresponding motion, and the score of the first interaction feature corresponding to the first motion feature corresponding to the corresponding motion may be multiplied to obtain a corresponding score of the human-object interaction detection result. By multiplying confidence levels of output results of a plurality of intermediate tasks such as interaction detection, motion recognition, and target detection, a confidence level of a final output matching result can be obtained, and based on the confidence level of the matching result, it is determined that whether there is a corresponding sub-motion between a corresponding human target and a corresponding object target. It can be understood that those skilled in the art may set rules by themselves to make a related determination and output a final human-object interaction detection result, which is not limited herein.

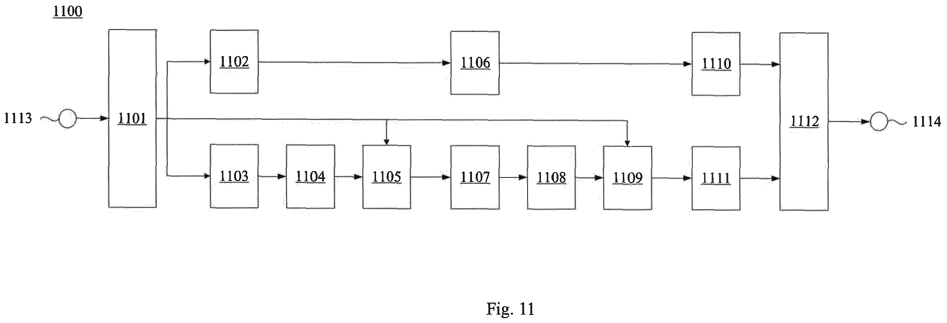

According to some embodiments, during extraction of a target feature, a plurality of rounds of feature extraction operations may be performed to enhance target-related information in the target feature. As shown in FIG. 11, a neural network 1100 may further include: a second target feature extraction sub-network 1106 configured to receive the plurality of first target features to output a plurality of second target features. It can be understood that operations of a sub-network 1101 to a sub-network 1105 and those of a sub-network 1110 to a sub-network 1112 in FIG. 11 are similar to those of the sub-network 901 to the sub-network 908 in FIG. 9, and an input 1113 and an output 1114 are respectively similar to the input 909 and the output 910. Details are not described herein again.

According to some embodiments, the target detection sub-network 1110 may be further configured to receive the plurality of second target features to output the target information of the plurality of targets in the image to be detected. Thus, through a second round of enhancement of the target feature, the target feature can be further enhanced to improve the accuracy of the result output from the target detection task and the accuracy of the final human-object interaction detection result.

According to some embodiments, during extraction of a motion feature, a plurality of rounds of feature screening and extraction operations may be performed to screen features that are more likely to have motion-related information, and enhance the motion-related information in the motion feature. As shown in FIG. 11, the neural network 1100 may further include: a second interaction feature extraction sub-network 1107 configured to receive the plurality of first motion features to output a plurality of second interaction features and a score of each of the plurality of second interaction features; a second screening sub-network 1108 configured to determine at least some second interaction features in the plurality of second interaction features based on the score of each of the plurality of second interaction features; and a second motion feature extraction sub-network 1109 configured to receive the at least some second interaction features and the plurality of image features to output one or more second motion features.

According to some embodiments, the motion recognition sub-network 1111 may be further configured to receive the one or more second motion features to output the motion information of the one or more motions in the image to be detected. Thus, through the second round of screening and enhancement of interaction features and target features, motion features that are more likely to have motion information can be obtained, so as to improve the accuracy of the result output from the motion recognition task and the accuracy of the final human-object interaction detection result.

According to the embodiments of the present disclosure, there are further provided an electronic device, a readable storage medium, and a computer program product.

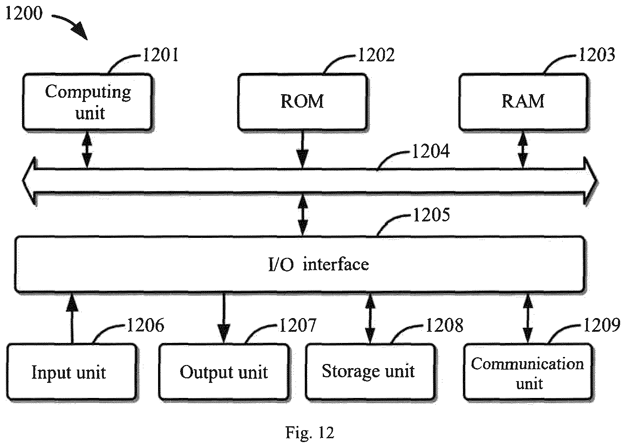

Referring to FIG. 12, a structural block diagram of an electronic device 1200 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 12, the device 1200 includes a computing unit 1201, which may perform various appropriate actions and processing according to a computer program stored in a read-only memory (ROM) 1202 or a computer program loaded from a storage unit 1208 to a random access memory (RAM) 1203. The RAM 1203 may further store various programs and data required for the operation of the device 1200. The computing unit 1201, the ROM 1202, and the RAM 1203 are connected to each other through a bus 1204. An input/output (I/O) interface 1205 is also connected to the bus 1204.

A plurality of components in the device 1200 are connected to the I/O interface 1205, including: an input unit 1206, an output unit 1207, the storage unit 1208, and a communication unit 1209. The input unit 1206 may be any type of device capable of entering information to the device 1200. The input unit 1206 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1207 may be any type of device capable of presenting information, and may include, but is not limited to, a display, a speaker, a video/audio output terminal, a vibrator, and/or a printer. The storage unit 1208 may include, but is not limited to, a magnetic disk and an optical disc. The communication unit 1209 allows the device 1200 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth™ device, an 802.11 device, a Wi-Fi device, a WiMAX device, a cellular communication device, and/or the like.

The computing unit 1201 may be various general-purpose and/or special-purpose processing components with processing and computing capabilities. Some examples of the computing unit 1201 include, but are not limited to, a central processing unit (CPU), a graphics processing unit (GPU), various dedicated artificial intelligence (AI) computing chips, various computing units that run machine learning network algorithms, a digital signal processor (DSP), and any appropriate processor, controller, microcontroller, etc. The computing unit 1201 performs the various methods and processing described above, for example, the human-object interaction detection method and the training method for a neural network. For example, in some embodiments, the human-object interaction detection method and the training method for a neural network may be each implemented as a computer software program, which is tangibly contained in a machine-readable medium, such as the storage unit 1208. In some embodiments, a part or all of the computer program may be loaded and/or installed onto the device 1200 via the ROM 1202 and/or the communication unit 1209. When the computer program is loaded onto the RAM 1203 and executed by the computing unit 1201, one or more steps of the human-object interaction detection method and the training method for a neural network described above can be performed. Alternatively, in other embodiments, the computing unit 1201 may be configured, by any other suitable means (for example, by means of firmware), to perform the human-object interaction detection method and the training method for a neural network.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including one or more programmable processors. The programmable processor may be a dedicated or general-purpose programmable processor that can receive data and instructions from a storage system, one or more input apparatuses, and one or more output apparatuses, and transmit data and instructions to the storage system, the one or more input apparatuses, and the one or more output apparatuses.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented human-object interaction detection method, comprising:

   obtaining (S201) a plurality of image features of an image to be detected;

   performing (S202) first target feature extraction on the plurality of image features to obtain a plurality of first target features;
   performing (S203) first interaction feature extraction on the plurality of image features to obtain a plurality of first interaction features and a score of each first interaction feature of the plurality of first interaction features;
   determining (S204) at least some first interaction features in the plurality of first interaction features based on the score of each first interaction feature of the plurality of first interaction features;
   determining (S205) a plurality of first motion features based on the at least some first interaction features and the plurality of image features;
   processing (S206) the plurality of first target features to obtain target information of a plurality of targets in the image to be detected, wherein the plurality of targets comprise one or more human targets and one or more object targets;
   processing (S207) the plurality of first motion features to obtain motion information of one or more motions in the image to be detected, wherein each motion of the one or more motions is associated with one of the one or more human targets, and one of the one or more object targets; and
   matching (S208) the plurality of targets with the one or more motions to obtain a human-object interaction detection result.

2. The method according to claim 1, wherein the image feature comprises a plurality of image-key features and a plurality of image-value features corresponding to the plurality of image-key features, and wherein the performing first interaction feature extraction on the plurality of image features to obtain the plurality of first interaction features and the score of each first interaction feature of the plurality of first interaction features comprises:

   obtaining a plurality of pre-trained interaction-query features;
   for each pre-trained interaction query-feature of the plurality of pre-trained interaction-query features, determining a first interaction feature corresponding to the pre-trained interaction-query feature based on a query result of the pre-trained interaction-query feature for the plurality of image-key features and based on the plurality of image-value features; and
   processing each first interaction feature of the plurality of first interaction features to obtain a score of the first interaction feature.

3. The method according to claim 1, wherein the image feature comprises a plurality of image-key features and a plurality of image-value features corresponding to the plurality of image-key features,

wherein the determining the plurality of first motion features based on the at least some first interaction features and the plurality of image features comprises:

for each first interaction feature of the at least some first interaction features, determining a first motion feature corresponding to the first interaction feature based on a query result of the first interaction feature for the plurality of image-key features and based on the plurality of image-value features.

4. The method according to claim 1, wherein the image feature comprises a plurality of image-key features and a plurality of image-value features corresponding to the plurality of image-key features, and wherein the performing first target feature extraction on the image features to obtain the plurality of first target features comprises:

obtaining a plurality of pre-trained target-query features; and
for each pre-trained target-query feature of the plurality of pre-trained target-query features, determining a first target feature corresponding to the pre-trained target-query feature based on a query result of the pre-trained target-query feature for the plurality of image-key features and based on the plurality of image-value features.

5. The method according to claim 1, further comprising:

performing first human sub-feature embedding on each first interaction feature of the at least some first interaction features to obtain a corresponding first interaction-human sub-feature; and
performing first object sub-feature embedding on each first interaction feature of the at least some first interaction features to obtain a corresponding first interaction-object sub-feature,
wherein the matching the plurality of targets with the one or more motions comprises:
for each motion of the one or more motions:

determining a first human target feature in the plurality of first target features based on a first interaction-human sub-feature of a first interaction feature corresponding to a first motion feature corresponding to the motion;
determining a first object target feature in the plurality of first target features based on a first interaction-object sub-feature of the first interaction feature corresponding to the first motion feature corresponding to the motion; and

associating a target corresponding to the first human target feature and a target corresponding to the first object target feature with the motion.

6. The method according to claim 5, further comprising:

for each first target feature of the plurality of first target features, generating a first target-matching sub-feature corresponding to the first target feature,
wherein for each motion of the one or more motions, determining the first human target feature in the plurality of first target features comprises:

for each motion of the one or more motions, determining the first human target feature in a plurality of first target-matching sub-features corresponding to the plurality of first target features based on a first interaction-human sub-feature of a first interaction feature corresponding to a first motion feature corresponding to the motion, and
wherein for each motion of the one or more motions, determining the first object target feature in the plurality of first target features comprises:
for each motion of the one or more motions, determining the first object target feature in the plurality of first target-matching sub-features corresponding to the plurality of first target features based on a first interaction-object sub-feature of a first interaction feature corresponding to a first motion feature corresponding to the motion.

7. The method according to claim 5, wherein for each motion of the one or more motions, determining the first human target feature in the plurality of first target features comprises:

for each motion of the one or more motions, determining the first human target feature based on a similarity between a first interaction-human sub-feature of a first interaction feature corresponding to a first motion feature corresponding to the motion and each first target feature of the plurality of first target features, and
wherein for each motion of the one or more motions, determining the first object target feature in the plurality of first target features comprises:
for each motion of the one or more motions, determining the first object target feature based on a similarity between a first interaction-object sub-feature of a first interaction feature corresponding to a first motion feature corresponding to the motion and each first target feature of the plurality of first target features.

8. The method according to claim 1, wherein the at least some first interaction features comprise at least one of the following:

a predetermined number of first interaction features with the highest score;
a predetermined proportion of first interaction features with the highest score; and
a first interaction feature with a score exceeding a predetermined threshold, and optionally, wherein the target information comprises a confidence level, and the motion information comprises a confidence level, and wherein the matching the plurality of targets with the one or more motions to obtain the human-object interaction detection result comprises:
determining a score of a corresponding human-object interaction detection result with respect to a corresponding human target, a corresponding object target, and a corresponding motion that are obtained through matching based on a confidence level of the corresponding human target, a confidence level of the corresponding object target, a confidence level of the corresponding motion, and a score of a first interaction feature corresponding to a first motion feature corresponding to the corresponding motion.

9. The method according to claim 1, further comprising:

performing second interaction feature extraction on the plurality of first motion features to obtain a plurality of second interaction features and a score of each second interaction feature of the plurality of second interaction features;
determining at least some second interaction features in the plurality of second interaction features based on the score of each second interaction feature of the plurality of second interaction features; and
determining one or more second motion features based on the at least some second interaction features and the plurality of image features;
wherein the processing the plurality of first motion features to obtain motion information of one or more motions in the image to be detected comprises:
processing the one or more second motion features to obtain motion information of the one or more motions in the image to be detected.

10. The method according to claim 1, further comprising:

performing second target feature extraction on the plurality of first target features to obtain a plurality of second target features, wherein the processing the plurality of first target features comprises:
processing the plurality of second target features.

11. The method according to any one of claims 1 to 10, wherein the target information comprises a type of a corresponding target, a bounding box surrounding the corresponding target, and a confidence level, and optionally,
wherein each motion of the one or more motions comprises at least one sub-motion between a corresponding human target and a corresponding object target, and wherein the motion information comprises a type and a confidence level of each sub-motion of the at least one sub-motion.

12. A computer-implemented training method for a neural network for human-object interaction detection, wherein the neural network comprises an image feature extraction sub-network, a first target feature extraction sub-network, a first interaction feature extraction sub-network, a first motion feature extraction sub-network, a target detection sub-network, a motion recognition sub-network, and a human-object interaction detection sub-network, and the method comprises:

obtaining (S601) a sample image and a ground truth human-object interaction label of the sample image;
inputting (S602) the sample image to the image feature extraction sub-network to obtain a plurality of sample image features;
inputting (S603) the plurality of sample image features to the first target feature extraction sub-network to obtain a plurality of first target features;
inputting (S604) the plurality of sample image features to the first interaction feature extraction sub-network, wherein the first interaction feature extraction sub-network is configured to receive the plurality of sample image features to output a plurality of first interaction features and a score of each first interaction feature of the plurality of first interaction features;
determining (S605) at least some first interaction features in the plurality of first interaction features based on the score of each first interaction feature of the plurality of first interaction features;
inputting (S606) the at least some first interaction features and the plurality of sample image features to the first motion feature extraction sub-network, wherein the first motion feature extraction sub-network is configured to receive the at least some first interaction features and the plurality of sample image features to output a plurality of first motion features;

inputting (S607) the plurality of first target features to the target detection sub-network, wherein the target detection sub-network is configured to receive the plurality of first target features to output target information of a plurality of targets in the sample image, wherein the plurality of targets comprise one or more human targets and one or more object targets; inputting (S608) the plurality of first motion features to the motion recognition sub-network, wherein the motion recognition sub-network is configured to receive the plurality of first motion features to output motion information of one or more motions in the sample image, wherein each motion of the one or more motions is associated with one of the one or more human targets, and one of the one or more object targets; inputting (S609) the plurality of targets and the one or more motions to the human-object interaction detection sub-network to obtain a predicted human-object interaction label; calculating (S610) a loss value based on the predicted human-object interaction label and the ground truth human-object interaction label; and adjusting (S611) a parameter of the neural network based on the loss value.

13. A neural network for human-object interaction detection, the neural network (900) comprising:

an image feature extraction sub-network (901) configured to receive an image to be detected to output a plurality of image features of the image to be detected;
a first target feature extraction sub-network (902) configured to receive the plurality of image features to output a plurality of first target features;
a first interaction feature extraction sub-network (903) configured to receive the plurality of image features to output a plurality of first interaction features and a score of each first interaction feature of the plurality of first interaction features;
a first screening sub-network (904) configured to determine at least some first interaction features in the plurality of first interaction features based on the score of each first interaction feature of the plurality of first interaction features;
a first motion feature extraction sub-network (905) configured to receive the at least some first interaction features and the plurality of image features to output a plurality of first motion features;
a target detection sub-network (906) configured to receive the plurality of first target features to output target information of a plurality of targets in the image to be detected, wherein the plurality of targets comprise one or more human targets and one or more object targets;
a motion recognition sub-network (907) configured to receive the plurality of first motion features to output motion information of one or more motions in the image to be detected, wherein each motion of the one or more motions is associated with one of the one or more human targets, and one of the one or more object targets; and
a human-object interaction detection sub-network (908) configured to receive the plurality of targets and the one or more motions to output a human-object interaction detection result.

14. A computer-readable storage medium storing computer instructions, wherein the computer instructions are used to cause a computer to perform the method according to any one of claims 1 to 12.

15. A computer program product, comprising a computer program, wherein when the computer program is executed by a processor, the method according to any one of claims 1 to 12 is implemented.

Fig. 1

200

Obtain a plurality of image features of an image to be detected — S201

Perform first target feature extraction on the plurality of image features to obtain a plurality of first target features — S202

Perform first interaction feature extraction on the plurality of image features to obtain a plurality of first interaction features and a score of each of the plurality of first interaction features — S203

Determine at least some first interaction features in the plurality of first interaction features based on the score of each of the plurality of first interaction features — S204

Determine a plurality of first motion features based on the at least some first interaction features and the plurality of image features — S205

Process the plurality of first target features to obtain target information of a plurality of targets in the image to be detected — S206

Process the plurality of first motion features to obtain motion information of one or more motions in the image to be detected — S207

Match the plurality of targets with the one or more motions to obtain a human-object interaction detection result — S208

Fig. 2

300

| |
|---|
| Obtain a plurality of image features of an image to be detected |

S301

↓

| |
|---|
| Perform first target feature extraction on the plurality of image features to obtain a plurality of first target features |

S302

↓

| |
|---|
| Perform first interaction feature extraction on the plurality of image features to obtain a plurality of first interaction features and a score of each of the plurality of first interaction features |

S303

↓

| |
|---|
| Determine at least some first interaction features in the plurality of first interaction features based on the score of each of the plurality of first interaction features |

S304

↓

| |
|---|
| Determine a plurality of first motion features based on the at least some first interaction features and the plurality of image features |

S305

↓

| |
|---|
| Process the plurality of first target features to obtain target information of a plurality of targets in the image to be detected |

S306

↓

| |
|---|
| Process the plurality of first motion features to obtain motion information of one or more motions in the image to be detected |

S307

↓

| |
|---|
| Perform first human sub-feature embedding on each of the at least some first interaction features to obtain a corresponding first interaction-human sub-feature |

S308

↓

| |
|---|
| Perform first object sub-feature embedding on each of the at least some first interaction features to obtain a corresponding first interaction-object sub-feature |

S309

↓

| |
|---|
| For each first target feature, generate a first target-matching sub-feature corresponding to the first target feature |

S310

↓

| |
|---|
| Match the plurality of targets with the one or more motions to obtain a human-object interaction detection result |

S311

Fig. 3

400

| Determine a first human target feature in a plurality of first target features based on a first interaction-human sub-feature of a first interaction feature corresponding to a first motion feature corresponding to a motion | S401 |

| Determine a first object target feature in the plurality of first target features based on a first interaction-object sub-feature of the first interaction feature corresponding to the first motion feature corresponding to the motion | S402 |

| Associate a target corresponding to the first human target feature and a target corresponding to the first object target feature with the motion | S403 |

Fig. 4

500

Obtain a plurality of image features of an image to be detected — S501

Perform first target feature extraction on the plurality of image features to obtain a plurality of first target features — S502

Perform first interaction feature extraction on the plurality of image features to obtain a plurality of first interaction features and a score of each of the plurality of first interaction features — S503

Determine at least some first interaction features in the plurality of first interaction features based on the score of each of the plurality of first interaction features — S504

Determine a plurality of first motion features based on the at least some first interaction features and the plurality of image features — S505

Perform second target feature extraction on the plurality of first target features to obtain a plurality of second target features — S506

Perform second interaction feature extraction on the plurality of first motion features to obtain a plurality of second interaction features and a score of each of the plurality of second interaction features — S507

Determine at least some second interaction features in the plurality of second interaction features based on the score of each of the plurality of second interaction features — S508

Determine one or more second motion features based on the at least some second interaction features and the plurality of image features — S509

Process the plurality of second target features to obtain target information of a plurality of targets in the image to be detected — S510

Process the one or more second motion features to obtain motion information of one or more motions in the image to be detected — S511

Match the plurality of targets with the one or more motions to obtain a human-object interaction detection result — S512

Fig. 5

600

| Obtain a sample image and a real human-object interaction label of the sample image | S601 |

↓

| Input the sample image to an image feature extraction sub-network | S602 |

↓

| Input a plurality of sample image features to a first target feature extraction sub-network | S603 |

↓

| Input the plurality of sample image features to a first interaction feature extraction sub-network | S604 |

↓

| Determine at least some first interaction features in a plurality of first interaction features based on a score of each of the plurality of first interaction features | S605 |

↓

| Input the at least some first interaction features and the plurality of sample image features to a first motion feature extraction sub-network | S606 |

↓

| Input a plurality of first target features to a target detection sub-network | S607 |

↓

| Input a plurality of first motion features to a motion recognition sub-network | S608 |

↓

| Input a plurality of targets and one or more motions to a human-object interaction detection sub-network | S609 |

↓

| Calculate a loss value based on a predicted human-object interaction label and the real human-object interaction label | S610 |

↓

| Adjust a parameter of a neural network based on the loss value | S611 |

Fig. 6

700

| Obtain a sample image and a real human-object interaction label of the sample image | S701 |

↓

| Input the sample image to an image feature extraction sub-network | S702 |

↓

| Input a plurality of sample image features to a first target feature extraction sub-network | S703 |

↓

| Input the plurality of sample image features to a first interaction feature extraction sub-network | S704 |

↓

| Determine at least some first interaction features in a plurality of first interaction features based on a score of each of the plurality of first interaction features | S705 |

↓

| Input the at least some first interaction features and the plurality of sample image features to a first motion feature extraction sub-network | S706 |

↓

| Input a plurality of first target features to a target detection sub-network | S707 |

↓

| Input a plurality of first motion features to a motion recognition sub-network | S708 |

↓

| Input each of the at least some first interaction features to a first human sub-feature embedding sub-network | S709 |

↓

| Input each of the at least some first interaction features to a first object sub-feature embedding sub-network | S710 |

↓

| Input each of the plurality of first target features to a first target feature embedding sub-network | S711 |

↓

| Input a plurality of targets and one or more motions to a human-object interaction detection sub-network | S712 |

↓

| Calculate a loss value based on a predicted human-object interaction label and the real human-object interaction label | S713 |

↓

| Adjust a parameter of a neural network based on the loss value | S714 |

Fig. 7

800

| Obtain a sample image and a real human-object interaction label of the sample image | S801 |

↓

| Input the sample image to an image feature extraction sub-network | S802 |

↓

| Input a plurality of sample image features to a first target feature extraction sub-network | S803 |

↓

| Input the plurality of sample image features to a first interaction feature extraction sub-network | S804 |

↓

| Determine at least some first interaction features in a plurality of first interaction features based on a score of each of the plurality of first interaction features | S805 |

↓

| Input the at least some first interaction features and the plurality of sample image features to a first motion feature extraction sub-network | S806 |

↓

| Input a plurality of first target features to a second target feature extraction sub-network | S807 |

↓

| Input a plurality of first motion features to a second interaction feature extraction sub-network | S808 |

↓

| Determine at least some second interaction features in a plurality of second interaction features based on a score of each of the plurality of second interaction features | S809 |

↓

| Input the at least some second interaction features and the plurality of sample image features to a second motion feature extraction sub-network | S810 |

↓

| Input a plurality of second target features to a target detection sub-network | S811 |

↓

| Input one or more second motion features to a motion recognition sub-network | S812 |

↓

| Input a plurality of targets and one or more motions to a human-object interaction detection sub-network | S813 |

↓

| Calculate a loss value based on a predicted human-object interaction label and the real human-object interaction label | S814 |

↓

| Adjust a parameter of a neural network based on the loss value | S815 |

Fig. 8

Fig. 9

Fig. 10

Fig. 11

1200

1201
Computing
unit

1202
ROM

1203
RAM

1204

1205
I/O interface

1206
Input unit

1207
Output unit

1208
Storage unit

1209
Communication
unit

Fig. 12